# EUROPÄISCHE PATENTSCHRIFT

(11) **EP 2 219 115 B1**
(45) Veröffentlichungstag und Bekanntmachung des Hinweises auf die Patenterteilung: **17.10.2012**
(21) Anmeldenummer: 10153233.1
(22) Anmeldetag: 10.02.2010
(51) Int. Cl.: G06F 13/38

(54) **Verfahren zum Einsatz einer Multifunktionsspeicherkarte auf Endgeräten**
Method for using a multifunction storage card on terminals
Procédé d'utilisation d'une carte mémoire multifonctions sur des terminaux

(30) Priorität: 11.02.2009 DE 102009008404; 18.08.2009 DE 102009037785
(43) Veröffentlichungstag der Anmeldung: 18.08.2010
(73) Patentinhaber: Certgate GmbH, 90409 Nürnberg (DE)
(72) Erfinder: Papagrigoriou, Paschalis Dr., 90482, Nürnberg (DE)
(74) Vertreter: 2K Patentanwälte Blasberg Kewitz & Reichel

(56) Entgegenhaltungen:
- DE-A1-102007 050 463

## Beschreibung

Die Erfindung betrifft ein Verfahren zum Einsatz und zur Nutzung einer Multifunktionsspeicherkarte.

Durch die in den letzten Jahren stark gestiegene und nun allgegenwärtige Nutzung der digitalen Datennetze sind damit auch die Bedürfnisse an die Sicherheit und Vertrauenswürdigkeit der Kommunikation und des Datenaustausches gestiegen. Zentrale Aufgaben sind unter anderem die Sicherstellung der Identität der Kommunikationspartner (Authentifizierung), die Generierung von digitalen Unterschriften (Signaturen) sowie die Verschlüsselung von Informationen zur Übertragung durch öffentliche Netze (Kryptographie). Die Kryptographie, zum Beispiel unter Nutzung des RSA-Standards, wird vielfältig genutzt. Hier ergibt sich jedoch das Problem der sicheren Erzeugung, Speicherung und Verwaltung der Kryptographie - Schlüssel und Signaturen. Eine bekannte und verbreitete Lösung für die Handhabung von Kryptographie-Schlüsseln und Signaturen ist dabei die Nutzung von Smartcards. Diese können Kryptographie- und / oder Signatur-spezifische Operationen sicher ausführen und sind meist einem spezifischen Nutzer zugeordnet. Sie weisen in der Regel einen Cryptographieprozessor auf. Wesentliche Aufgabe ist hier die sichere und effiziente Einbindung der Smartcards in das Endgerät (Host-System), zum Beispiel ein PC-Systeme, Notebook oder mobiles Gerät wie ein PDA oder Smartphone. Die Einbindung umfasst dabei sowohl die physische Anbindung (Hardware-Schnittstelle) als auch die Software-Einbindung der Smartcard-spezifischen Operationen in das Host-System. Problematisch ist hierbei die Existenz einer Vielzahl von Standards für die Hard- und Software-Schnittstellen. Die meisten der aktuellen Endgeräte verfügen nicht über Vorrichtungen zur direkten Aufnahme von Smartcards. Oftmals werden deshalb Smartcard-Lesegeräte per USB-Schnittstelle oder Bluetooth angebunden. Dies ist insbesondere für mobile Anwendungen keine elegante Lösung, da ein weiteres Gerät benötigt wird. Zusätzlich ergibt sich das Problem, dass man für die Ansteuerung der Smartcard oft Low-Level Zugriffe oder Administrator-Rechte benötigt, welche nicht immer verfügbar sind.

In WO 2007/138021 A1 wird eine Multifunktionsspeicherkarte, d.h. eine Speicherkarte mit mindestens einem zusätzlichem Funktionsmodul beschrieben, wobei das Funktionsmodul eine Smartcard sein kann. Bei diesem Stand der Technik wird Wissen über die interne logische oder physikalische Sektorstruktur des Flashspeichers der Speicherkarte sowie die Aufteilung der Daten in Datenblöcken und deren Speicherung in spezifischen, statischen oder dynamischen Adressen angenommen. Dies erfordert genaue Kenntnis des internen Aufbaus bzw. der logischen Organisation der Speicherkarte und auf Seite des Hostsystems die Fähigkeit für Low-level Zugriffen und Adressierung der benötigten Dateninhalte. In DE102007050463A1 wird auch ein Verfahren nach dem Praämbel von Anspruch 2 vorgeschlagen.

Zur weiteren Darstellung des Standes der Technik und seiner Probleme sollen zuerst einige Aspekte der üblichen Architektur zur Verwendung von Speicherkarten angeführt werden, bei welcher das Host-System über einen Bus mit einer Speicherkarte kommuniziert. Typische Ausprägungen der Speicherkarte können dabei SD-Karten, microSD-Karten, XD-Karten, Memory Sticks oder ähnliche Formate sein. Der Bus folgt einem standardisierten Protokoll, welches die geordnete Übertragung von Befehlen und Daten ermöglicht. Klassische Befehle sind zum Beispiel das Lesen und Schreiben von Datenblöcken. Dabei kann eine Standard-Speicherkarte, welche über den Bus angebunden ist, im typischen Fall eine Controller Unit und einen Flashspeicher beinhalten. Aufgabe der Controller Unit ist es, die über den Bus übertragenen Befehle zu decodieren und Daten entsprechend auf die verschiedenen Zellen des Flashspeichers zu verteilen. Die Verwendung eines sektorweise organisierten Dateisystems ist hier üblich, wobei es eine Vielzahl von Möglichkeiten zur Implementierung von Dateisystemen gibt.

Bei einer aus US 2005 25 29 78 A1 bekannten Erweiterung der Speicherkartenarchitektur, ist neben dem Speicher und der Controller Unit auch eine Smartcard integriert. Bei bisherigen Ausführungen der Integration einer Smartcard in eine Speicherkarte entsprechend dem Stand der Technik wird zwar kein zusätzlicher Smartcard-Steckplatz im Gerät benötigt, die Smartcard wird jedoch durch spezifische Befehle angesteuert, welche im Kommunikationsprotokoll zwischen Host und Speicherkarte in Form von Sonderfunktionen definiert sein müssen, welche über den Standardumfang gewöhnlicher Speicherkarten hinaus gehen. Zur Ansteuerung derartiger Sonderfunktionen ist ein direkter Low-level-Zugriff auf das Kommunikationsprotokoll notwendig. Dies kann oft nur mit Administratorenrechten oder durch eine direkte Unterstützung im Betriebssystem sichergestellt werden. Die vorausgesetzte Nutzung von Administratorenrechten und direkten Low-level-Zugriffen kommt aus Sicherheitsgründen nicht als Standard-Lösung in Frage, da auf vielen Geräten (insbesondere bei zentral verwalteten Firmengeräten) die Nutzer im Allgemeinen keine Administratorenrechte haben.

Ein Versuch zur direkten Implementierung von Smartcard-Funktionen innerhalb der Controller Unit von Speicherkarten, die nicht Smartcard-Module aufweisen, wurde bereits in Form der Erweiterung des sog. SD-Standards (Secure Digital) für Speicherkarten unternommen. Smartcard-Funktionen können dadurch in entsprechend ausgestattete Speicherkarten integriert werden. Dieses Prinzip setzt jedoch die entsprechende Unterstützung des Standards durch Hard- und Softwarehersteller voraus, an welchem der breite Einsatz dieser Technologie bisher gescheitert ist.

### Aufgabe und Lösung der Erfindung

Aufgabe der vorliegenden Erfindung ist es deshalb, die genannten Nachteile zu überwinden. Insbesondere soll eine Lösung zur plattformunabhängigen Einbindung von Smartcard-Modulen in Speicherkarten vorgeschlagen werden, für deren Zugriff weder Smartcard-spezifische Befehlserweiterungen im Betriebssystem, Low-Level Zugriffsoperationen, noch Erweiterungen der Hardware-Einrichtung der Endgeräte oder Installationen zusätzlicher Treiber vorauszusetzen sind, um somit eine breite, plattformübergreifende Verwendung von Smartcard-Modulen und deren Anwendung in bereits existierenden oder nicht explizit dafür vorgesehenen Endgeräten zu ermöglichen.

Gelöst wird die Aufgabe durch ein Verfahren mit den Merkmalen der unabhängigen Ansprüche

Demnach wird ein Verfahren zum Einsatz und Nutzung einer Multifunktionsspeicherkarte vorgeschlagen, die eine Controller Unit und mindestens ein Funktionsmodul aufweist, von dem zumindest eine Datenverarbeitungsfunktion ausführt wird, die verschieden von einer Datenspeicherfunktion ist, wobei:
zumindest ein Teil eines von der Multifunktionsspeicherkarte empfangenen ersten Datenstromes auf das Funktionsmodul umgeleitet wird, wenn von der Controller Unit durch Auswerten des ersten Datenstromes ein darin enthaltenes vorab definiertes erstes Schlüsseldatenmuster erkannt wird (Ablauf A). Dieses Schlüsseldatenmuster ist vorzugsweise als Bit-Muster oder als Bit-Strom ausgebildet und ist innerhalb der Nutzdaten (also nicht Adressinformationen) angeordnet. Sobald dieses Schlüsseldatenmuster erkannt wird, wird der Datenstrom umgeleitet, für eine definierte Dauer (Anzahl Bytes) oder bis zu einem definierten weiteren Muster. Durch diesen Ansatz kann eine Kommunikation vom Host mit dem Funktionsmodul erreicht werden.
Für die Kommunikation zurück vom Funktionsmodul ist folgendes zu beachten (Ablauf B). Der Host ruft nach einer bestimmten Wartezeit das Ergebnis vom Funktionsmodul z.B. durch einen Read-Befehl an die Multifunktionsspeicherkarte ab. Dies erfolgt indem er einen bestimmten Block oder eine Datei oder ähnliches auf dem Speichermedium abruft, in dem ein zweites Schlüsseldatenmuster enthalten ist. Diese Information/Datenstrom wird nun, bevor es an den Host gesendet wird, vom Kartencontroller/Controller Unit analysiert. Wenn in diesem Datenstrom das zweite Muster erkannt wird, so wird
zumindest ein Teil eines auf der Multifunktionsspeicherkarte (5) abgelegten zweiten Datenstromes vor seiner Weiterverarbeitung modifiziert, und mit Informationen des Funktionsmoduls angereichert. Der Begriff angereichert kann ersetzen oder auch anhängen von Daten bedeuten.

Jeder Ablauf A oder B definiert für sich genommen schon ein vorteilhaftes Verfahren, das auf einer Multifunktionsspeicherkarte durchgeführt werden kann. Die beiden Abläufe können aber auch beide in Kombination auf einer Multifunktionsspeicherkarte durchgeführt werden. Es ist zu beachten, dass diese Ansätze gewählt werden, um Speicherkarten, die nach ihrem Standard keine Multifunktion unterstützten, so zu erweitern, dass eine weitere Funktion implementiert werden kann. Dies soll erreicht werden, ohne dass Hardwareänderungen am Host notwendig sind. Ferner soll auch das Betriebssystem unangetastet bleiben. Lediglich eine Anwendung, die auf dem Betriebssystem läuft, brauch angepasst werden, um die Funktionseinheit anzusprechen. Folglich läuft die Kommunikation auf Seite des Hosts vorzugsweise auf der höchsten Anwendungsebene also oberhalb der Blockebene oder sogar der File-System-Ebene ab. Hierdurch kann eine zusätzliche Funktionalität insbesondere bei mobilen Endgeräten wir Telefonen oder PDAs erreicht werden, ohne dass Modifikationen an der Hardware notwendig sind, da der Standard/Spezifikation der Speicherkarten eingehalten wird. Es ist zu beachten, dass in der Regel der Datenstrom bei den Speicherkarten seriell ist.

Die nachfolgend noch näher beschriebene Erfindung ist im Vergleich zu herkömmlichen Lösungen unabhängig von der tatsächlichen physischen Unterteilung der Daten auf dem Flash-Speicher einer Multifunktionsspeicherkarte sowie der Adressierung und physischen Speicherung auf Sektoren. Eine Änderung oder Anpassung der Treiber oder eines Standardbetriebssystems ist ebenfalls nicht erforderlich. Aus diesem Grund kann die hier offenbarte Methode in einer größeren Zahl von Anwendungen plattformunabhängig eingesetzt werden.

### Figurenbeschreibung

Im Folgenden werden die Figuren kurz beschrieben. Es zeigt:
- Fig. 1: den schematischen Aufbau einer Speicherkarte mit Zusatzfunktion.
- Fig. 2: einen Datenstrom mit unterschiedlichen Blöcken
- Fig. 3: ein Flussdiagramm zum Senden von Informationen
- Fig. 4: ein Flussdiagramm zum Empfangen von Informationen.

### Beschreibung von Ausführungsbeispielen

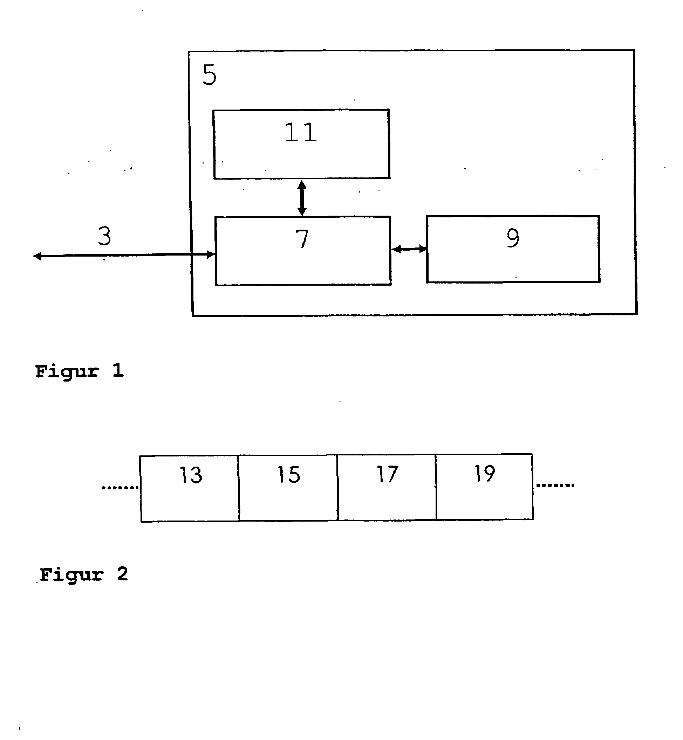

Die Erfindung soll nun an einem Ausführungsbeispiel erläutert und gegenüber dem Stand der Technik abgegrenzt werden. Es wird sich zunächst auf das Blockschaltbild in Figur 1, in welchem der Bus 3 die Multifunktionsspeicherkarte 5, im weiteren auch kurz Speicherkarte genannt, an ein (nicht dargestelltes) Host-System anbindet, die eine Controller Unit 7 enthält, welche wiederum mit einem Datenspeicher, auch Flashspeicher oder kurz Speicher 9 genannt, sowie mit dem Funktionsmodul, das hier beispielhaft ein Smartcard-Modul (auch Smartcard 11 genannt) entspricht, verbunden ist. Es wird davon ausgegangen, dass die Speicherkarte 5 unabhängig von Host-System-Typ, Betriebssystem-Art oder Speicherkarienformat, Kommunikationsbefehle entgegen nimmt, wie einen Lesebefehl oder Schreibbefehl. Wobei der Aufbau eines solchen Befehls aus Operand und Nutzdaten besteht. Diese Daten nennt man Payload. Bei klassischen Lese- oder Schreiboperationen wird erwartet, dass Daten von der Controller Unit 7 direkt vom Speicher 9 geholt oder zum Speicher 9 geleitet werden.

Auf dem Speicher 9 ist ferner über die üblichen im Host bekanntgemachten Zugriffsmechanismen und Speicherobjekte auf dem Speichermedium ein zweites Schlüsseldatenmuster als Datenobjekt abgelegt, das wiederum dazu dient, vom Controller erkannt zu werden, wenn es vom Host angefordert wird.

Auf dem Speicher 9 kann das Datenobjekt aus einem oder mehreren Blöcken bestehen oder ein Speicherbereich oder ein Filesystemelement (z.B. Datei) sein, in dem ein Identifikation/zweite Schlüsseldatenmuster abgelegt ist, das wiederum dazu dient, wenn es vom Host abgerufen wird, als zweite Identifikation zu dienen. Dieser Bereich kann auch als Datenobjekt bezeichnet werden, um die Unabhängigkeit von der Lage zu beschreiben. Es ist zu beachten, dass wenn das Datenobjekt nicht gefunden wird, es automatisch von der Karte oder von der Applikation auf dem Host erstellt werden kann. Die Größe dieses Speicherbereichs sollte größter gewählt sein als einer oder mehrere der Caches, die zwischen Speicher und Host angeordnet ist. Der Speicher kann hierbei auf unterschiedlichen Ebenen angeordnet sein, wie auf der Hardware-Ebene des Hosts oder der Karte oder auf Saftware-Ebenen des Hosts oder der Karte. Diesen Größenparameter kann man dynamisch festlegen, genauso wie die Identifikation bzw. das zweite Schlüsseldatenmuster in dem Speicherbereich bzw. Datenobjekt. So kann z.B. bei Verwendung einer Datei die Größe der Datei so festgelegt werden, dass sie größer als der Cache oder die Summe der Caches ist. Also erfolgt somit eine dynamische Festlegung der Datei. Beim erstmaligen Benutzen der Speicherkarte kann der Speicherbereich bzw, das Datenobjekt mit dem Schlüsseldatenmuster angelegt werden und die Gesamtgröße kann abhängig vom Cache eingestellt werden. Ferner kann die Größe der Datei auch während der Benutzung angepasst werden, wenn erkannt wird, dass der Cache immer wieder die gleichen Daten liefert. Anhand eines Zählers oder Prüfsummen kann dies bestimmt werden, so dass sichergestellt wird, dass die gleichen Daten nicht mehrfach gelesen werden.

Erfindungsgemäß analysiert die Controller Unit 7 permanent einerseits die Datenströme, welche sie bei der Kommunikation mit dem Host-System über den Bus 3 empfängt. Andererseits analysiert die Controller Unit 7 fortlaufend auch die Datenströme, die sie vom Speicher 9 empfängt. Die Betrachtung ist hierbei völlig unabhängig von den verwendeten Kommunikationsbefehlen und Steuerelementen, von möglichen Dateisystemen, verwendeten Sektoren, Adressen oder anderen logischen Aufteilungen und Mechanismen zum Adressieren der Daten.

Erfindungsgemäß wird die Analyseaufgabe der Controller Unit 7 derart erledigt, dass nach fest definierten Schlüsseldatenmustern im Datenstrom gesucht wird. Abhängig vom Auftreten derartiger Schlüsseldatenmuster werden durch die Controller Unit Teile des Datenstromes an das Funktionsmodul 11, hier beispielhaft an die Smartcard, gesendet. Um nun die Antwort von der Smartcard zu erlangen, werden Teile des Datenstromes, die vom Speicher 9 empfangen wurden auf das zweite Schlüsseldatenmuster untersuch, dann modifiziert in dem das Ergebnis der Smartcard eingespeist wird in den Datenstrom und anschließend an das Host-System übertragen. In beiden Fällen können die erwarteten Schlüsseldatenmuster auch identisch sein, da die Controller Unit die Datenströme von unterschiedlichen Quellen empfängt. Um das Auftreten des zweiten Schlüsseldatenmusters zu erreichen, liest die Applikation auf dem Host den Speicherbereich. Die Daten dieses Speicherbereichs sind mit dem zweiten Schlüsseldatenmuster geimpft und werden somit erkannt. Strömt nun das Muster an der Controller Unit vorbei, werden die folgenden Daten in einer definierten Länge ersetzt oder bis zu einem Stoppmuster. Ferner wird auch ein Zähler in die Daten eingefügt, so dass sichergestellt wird, dass die Applikation nicht die gleichen Daten aus einem Cache des Hosts liest. In diesem Fall setzt die Host-Anwendung andere Mechanismen ein und erweitert die Größe des gespeicherten Datenobjektes/Speicherbereich bis der in Frage kommende Cache überläuft und nicht gecachte Daten von der Karte geholt werden.

Ein Schlüsseldatenmuster ist vorzugsweise derart gestaltet, dass ein exaktes Auftreten der erwarteten Datenkombination in gewöhnlichen Datenströmen extrem unwahrscheinlich ist. Das Schlüsseldatenmuster entspricht also einer bestimmten und sicher erkennbaren Datenfolge, wobei die Datenfolge nicht zwingend als eine zusammenhängende Sequenz auftreten muss, sondern z.B. auch aus mehreren Abschnitten bestehen kann. In einer möglichen Ausführungsform ist es 16 Bytes lang und weist noch ein CRC auf. Andere Längen sind natürlich denkbar.

Eine Multifunktionsspeicherkarte kann mehrere Funktionsmodule enthalten. Dies kann abhängig von den Anwendungen sein, die ein oder mehrere Funktionsmodule nutzen. In solchen Situationen können Schlüsseldatenmuster gruppiert werden, um jeweils eine Kommunikation zwischen Controller Unit und Funktionsmodul abgrenzen zu können. Eine Gruppierung umfasst eine Anzahl von Schlüsseldatenmuster, die für ein bestimmtes Funktionsmodul und/oder für eine bestimmte Anwendung usw. verwendet werden kann.

Die interne, sequenzielle Organisation eines Datenstromes, wie dieser für die erfindungsgemäβe Aufgabenerfüllung der Controller Unit von Interesse ist, soll der Vollständigkeit halber im Folgenden an einem Ausführungsbeispiel erläutert werden, welches in Figur 2 dargestellt ist.

Bei dem in Figur 2 dargestellten Datenstrom folgt auf das Schlüsseldatenmuster 13 ein Block mit Daten 15. Dieser Datenblock 15 kann wiederum Befehle und/oder Daten für das Funktionsmodul oder Informationen von dem Funktionsmodul enthalten. Bei den vom Funktionsmodul empfangen Daten tauscht die Controller Unit nach Erkennung des Schlüsseldatenmusters 13 den aus dem Datenobjekt/Speicherbereich gelesenen Datenblock 15 durch einen Datenblock, der die vom Funktionsmodul empfangenen Daten enthält, und leitet den insgesamt modifizierten. Datenstrom an das Host-System weiter. Zusätzlich, optionale Elemente im Datenstrom können z.B. Prüfsummen 17 oder weitere Daten 19 zur Kennzeichnung der Aktualität der transportierten Daten sein. Die Reihenfolge der Elemente 15, 17 und 19 im sequenziellen Datenstrom spielt dabei keine Rolle und kann auf verschiedene Weise festgelegt werden.

Im Folgenden werden zwei für das erfindungsgemäße Verfahren besonders relevante Abläufe A und B für das erfindungsgemäße Verfahren dargestellt und erläutert:

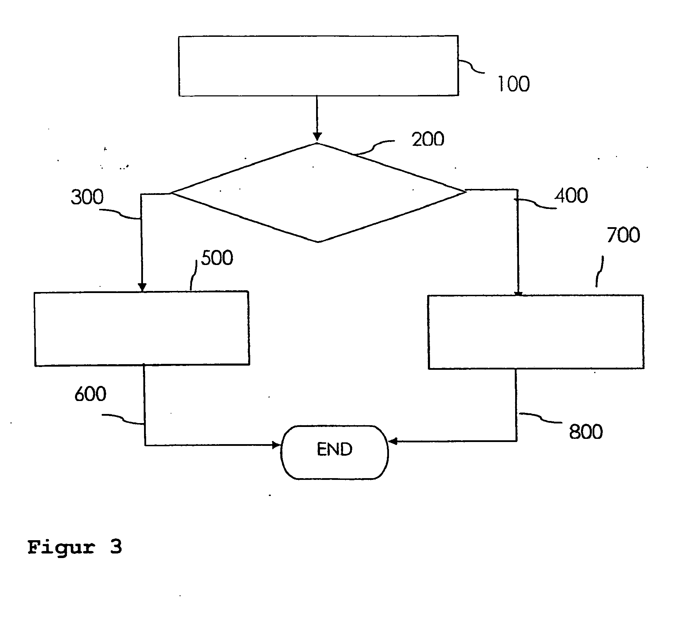

In der Figur 3 ist der Ablauf A dargestellt. Darin empfängt die Controller Unit 7 zunächst in einem ersten Schritt 0 einen Datenstrom vom Host-System und analysiert diesen.

Wird in einem nächsten Schritt 200 im Datenstrom ein vordefiniertes und erwartetes Schlüsseldatenmuster 13 erkannt, so verzweigt der Ablauf zum Zweig 300 und geht dann zum Schritt 500, bei dem vordefinierte Teile 15 dieses Datenstromes an das Funktionsmodul 11 weiter geleitet werden. Solche Teile (siehe z.B. Datenblock 15 in Fig. 2) können im Falle einer Smartcard beispielsweise eine Mischung von Smartcard-Befehlen und/oder Smartcard-Daten sein.

Die in einem Datenstrom definierte Datenteile 15 können bei Auftreten eines Schlüsseldatenmusters 13 ausschließlich an das Funktionsmodul 11 gelenkt werden, zusätzlich zwischengespeichert oder auch als Kopie im Speicher 9 abgelegt werden. Der weitere Ablauf führt über den Zweig 600 zum Ende.

Wird im Schritt 200 kein erwartetes Schlüsseldatenmuster 13 erkannt, so verzeigt der Verfahrensablauf zum Zweig 400 und führt auf den Schritt 700, in dem die Controller Unit 7 diesen Datenstrom so verarbeitet, wie das der Fall bei einer gewöhnlichen Speicherkarte wäre und somit die Daten direkt an den Speicher 9 weiter leitet. Dann geht es über den Zweig 800 zum Ende des Ablaufs.

Nach jedem Schlüsseldatenmuster 13 können eine Anzahl von Daten für das Funktionsmodul 11 und/oder entsprechende Prüfsummen 17 eingefügt sein (s. auch Fig. 2), welche von der Controller Unit 7 ebenfalls erkannt und ausgewertet werden können. Weitere Datenelemente in einem für das Funktionsmodul 11 vorgesehenen Datenblock können die Aktualität des Datenstroms kennzeichnen. Dies kann zum Beispiel durch fortlaufende Nummern 19 geschehen und ist relevant, wenn die Multifunktionsspeicherkarte im Zusammenspiel mit Cache Speichern betrieben wird. Sollte ein Teil des Datenstromes, zum Beispiel durch das Zusammenspiel mit Speichercaches, nicht mehr aktuell oder schon bearbeitet sein, so kann er von der Controller Unit 7 verworfen werden.

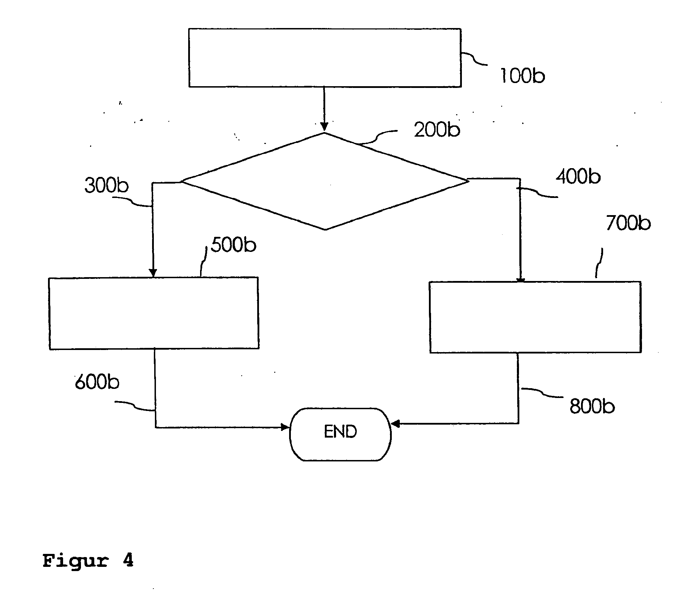

In der Figur 4 ist der Ablauf B dargestellt. Hierbei empfängt die Controller Unit 7 in einem ersten Schritt 100b einen Datenstrom vom Speicher 9 und analysiert diesen.

Dann wird in einem Schritt 200b innerhalb dieses Datenstroms geprüft, ob ein erwartetes Schlüsseldatenmuster 13 erkannt werden kann. Dieses Schlüsseldatenmuster ist in der Regel im Datenobjekt/Speicherbereich abgelegt. Ist dies der Fall, so geht es über den Zweig 300b zum Schritt 500b, bei dem vordefinierte Teile 15 dieses Datenmusters erst modifiziert bzw. ersetzt und anschließend der Datenstrom weiterverarbeitet werden, indem beispielsweise die Kommunikation mit dem Host-System fortgesetzt wird. Die oben erwähnte Modifikation im Schritt 500b kann beispielsweise auf Basis von Daten, welche die Controller Unit 7 vom Funktionsmodul 11 (hier eine Smartcard) erhalten bzw. zwischengepuffert hat. Der Vollständigkeit halber sei erwähnt, dass ein solcher Puffer auch leer sein kann.

Wird im Schritt 200b kein erwartetes Schlüsseldatenmuster 13 erkannt, so geht es über den Zweig 400b zum Schritt 700b, in dem die Controller Unit 7 diesen Datenstrom ohne weiteren Eingriff in den Datenstrom weiter verarbeitet. Die Controller Unit 7 arbeitet dann so, wie das bei einer gewöhnlichen Speicherkarte der Fall ist.

Auch hier können nach dem Schlüsseldatenmuster 13 zusätzlich zu den Daten 15 für das Funktionsmodul auch Pritfsummen 17 enthalten sein, welche von der Controller Unit 7 berechnet werden können. Weitere Datenelemente 19 können die Aktualität des Datenstroms kennzeichnen und hinzugefügt sein. Dies kann zum Beispiel durch fortlaufende Nummern geschehen und ist relevant, wenn die Multifunktionsspeicherkarte im Zusammenspiel mit Cache-Speichern betrieben wird. Der Ablauf geht dann über den Zweig 800b zum Ende.

Besondere Vorteile des oben beschriebenen Einsatzes und Nutzung eines Funktionsmoduls innerhalb einer Multifunktionsspeicherkarte im Vergleich zum Stand der Technik sind die Adressierungs-unabhängige Verwendung von Standard Lese- und Schreibbefehlen oder auch die Verwendung von im Kommunikationsprotokoll integrierte und für das Funktionsmodul spezifische Kommandosätze. Damit ist ein Verfahren definiert, das unabhängig vom Dateisystem und seine logischen Struktur oder der physikalischen Sektorstruktur der Datenorganisation im Speicher ist. Die Kommunikation mit dem Funktionsmodul kann gewährleistet werden ohne weitere Betriebssystemunterstützung und ohne Administratorrechte, die in der Regel bei Installationen oder direkte Nutzung von Treibersoftware oder anderen Low-level Host-Systemressourcen.

Als Funktionsmodul können neben eine Smartcard auch weitere Bausteine, wie Funkmodule, Kameras, Radios, Wlan etc. zum Einsatz kommen.

Bei dem hier vorgestellten Verfahren können verschiedene Schlüsseldatenmuster (erste, zweite Schlüsseldatenmuster usw.) verwendet werden. Einzelne Schlüsseldatenmuster können auch identisch sein. Auch können die Schlüsseldatenmuster einer bestimmten Gruppierung zugeordnet sein oder zu verschiedenen Gruppierungen gehören. Die Multifunktionsspeicherkarte kann mehrere Funktionsmodule aufweisen, wobei mehrere Schlüsseldatenmuster erkannt werden können, die verschiedenen Gruppierungen zugeordnet sind. Auch können solche Schlüsseldatenmuster, die derselben Gruppierung zugeordnet sind, demselben Funktionsmodul zugeordnet werden.

Zusammenfassend wird durch die vorliegende Erfindung eine plattformunabhängige Nutzung eines Funktionsmoduls einer Multifunktionsspeicherkarte auf Host-Systemen, insbesondere auf mobilen Endgeräten, ermöglicht, wobei als einzige Voraussetzung zur Nutzung der Dienste und Funktionen des Funktionsmoduls das Betreiben von externen marktüblichen Speicherkarten angenommen wird. Die Nutzung von Speicherkarten mit zusätzlichem Funktionsmodul (Multifunktionsspeicherkarte) erfolgt erfindungsgemäß durch die Verwendung von speziellen Schlüsseldatenmustern, welche die Controller Unit der Multifunktionsspeicherkarte durch permanente Analyse aller Datenströme erkennen kann. Einem Schlüsseldatenmuster können im Datenstrom weitere für die Funktionseinheit spezifische Befehle und Daten angehängt sein oder werden, die wiederum zwischen Controller Unit der Speicherkarte und Funktionsmodule ausgetauscht werden. Mit Hilfe solcher Schlüsseldatenmuster werden die für ein Funktionsmodul vorgesehenen Daten identifiziert und anschließend an dieses weitergeleitet. Nach diesem Prinzip werden auch Daten, die ein Funktionsmodul als Antwort an die Controller Unit sendet, durch Modifikation bzw. Manipulation von Teilen des Datenstromes an das Host-System weitergeleitet.

## Patentansprüche

1. Verfahren zum Empfang von Daten von einem Funkticnsmodul (11) durch einen Host ohne Installation von zusätzliche Treibern, wobei das Funktionsmodul auf einer Multifunktionsspeicherkarte (5) angeordnet ist, die eine Controller Unit (7) und Speicher (9) aufweist, wobei die Controller Unit (7) dem Speicher (9) und dem Funktionsmodul (11) vorgeschaltet ist und den Zugriff auf den Speicher (9) und das Funktionsmodul(11) kontrolliert, wobei das Funktionsmodul (11) verschieden von einer Datenspeicherfunktion ist, wobei auf dem Speicher (9) Datenobgekte darunter auch ein Datenobjekt mit einem definierten Schlüsseldatenmuster (13) abgelegt sind umfassend die Schritte:
- Anfordern eines Datenobjektes vom Speicher (9) der Multifunktionsspeicherkarte (5) durch einen Host, unter Verwendung eines Befehls, der im Befehlssatz der Speicherkarte ist, der an den Speicher (9) gerichtet ist, und der das Datenobjekt aus dem Speicher (9) lesen soll, wenn Daten vom Funktionsmodul (11) an einem Host übertragen werden sollen;
- Analysieren des angeforderten Datenstroms durch die Controller Unit (7) und wenn das Schlüsseldatenmuster (13) erkannt wird, so wird der Datenstrom durch Daten vom Funktionsmodul (11) angereichert, um den modifizierten Datenstrom an den Host weiterzuleiten, und wenn kein Schlüsselmuster erkannt wird, werden die Daten unmodifiziert an den Host weitergeleitet.

2. Verfahren zum Senden und Empfangen von Daten zwischen einem Host und einem Funktionsmodul (11), das auf einer Multifunktionsspeicherkarte (5) angeordnet ist, die eine Controller Unit (7) und Speicher (9) aufweist, wobei die Controller Unit (7) dem Speicher (9) und dem Funktionsmodul (11) vorgeschaltet ist und den Zugriff auf den Speicher (9) und das Funktionsmodul(11) kontrolliert, wobei das Funktionsmodul (11) verschieden von einer Datensrpeicherfunkti.on ist,
umfassend die Schritte:
- Senden eines Datenstroms vom Host an die Multifunktionsspeicherkarte (5), unter Verwendung eines Befehls, der im Befehlssatz der Speicherkarte ist, der an den Speicher (9) gerichtet ist, wobei der Datenstrom Nutzdaten und Adressierungsdaten umfasst und wobei im Datenstrom in die Nutzdaten ein vorab definiertes erstes Schlüsseldatenmuster (13) eingefügt wurde, wenn die Daten an das Funktionsmodul (11) gerichtet sind, und kein Schlüsseldatenmuster (13) eingefügt wurde, wenn der Datenstrom an den Speicher gerichtete Daten enthält;
- Empfangen des Datenstroms durch die Multifunktionsspeicherkarte (5) und Analysieren des Datenstroms durch die Controller Unit (7) und wenn das erste Schlüsseldatenmuster (13) erkannt wird, so werden Daten (15) aus dem Datenstrom an das Funktionsmodul (11) geleitet,
- verarbeiten der Daten durch das Funktionsmodul und Bereitstellen der verarbeiteten Daten der Controller Unit (7),
**gekennzeichnet durch**
- Anfordern eines Datenobjektes vom Speicher (9) der Multifunktionsspeicherkarte (5) **durch** einen Host, wobei auf dem Speicher (9) Datenobjekte darunter anch ein Datenobjekt mit einem definierten zweiten Schlüsseldatenmuster (13) abgelegt sind unter Verwendung eines Befehls, der im Befehlssatz der Speicherkarte ist, der an den Speicher (9) gerichtet ist, und der das Datenobjekt aus dem Speicher (9) lesen soll,
- Analysieren des angeforderten Lese-Datenstroms **durch** die Controller Unit (7) und wenn das zweite Schlüssel datenmuster (13) erkannt wird, so werde Teile des Lese-Datenstroms durch Daten vom Funktionsmodul (11) ersetzt, um den modifizierten Lese-Datenstrom an den Host weiterzuleiten, und wenn kein zweits Schlünd duntenmuster erkannt wird, werden die Daten unmodifiziert an den Host weitergeleitet.

3. Verfahren nach Anspruch 2 wobei, das erste Schlüsseldatenmuster und das zweite Schlüsseldatenmuster identisch sind.

4. Verfahren nach Anspruch 2, wobei das erste und das zweite Schlüsseldatenmuster einer Gruppierung zugeordnet sind, um mehrere Funktionsmodule anzusprechen.

5. Verfahren nach einem der vorhergehenden Ansprüche, wobei das Funktionsmodul eines oder mehrere, der folgenden ist: eine Cryptographieprozessor, Funkmodul, Kamera, Radio, TV-Modul.

6. Verfahren nach einem der vorhergehenden Ansprüche, wobei der Speicher ein Flash-Speicher ist, nach einem der folgenden Standards SD-Karten, mini-SD, microSD-Karten, XD-Karten, Memory Stick, Compact Flash wobei die Datenübertragung vornehmlich seriell ist.

7. Multifunktionsspeicherkarte zum Senden von Daten an einen Host umfassend
eine Schnittstelle zum Host
ein Funktionsmodul (11),
Speicher (9),
eine Controller Unit (7), die dem Speicher (9) und dem Funktionsmodul (11) vorgeschaltet ist und den Zugriff auf den Speicher (9) und das Funktionsmodul(11) kontrolliert, wobei das Funktionsmodul (11) verschieden von einer Datenspeicherfunktion ist, wobei auf dem Speicher (9) in einem Datenobjekt ein definiertes Schlüsseldatenmuster (13) abgelegt ist, wobei die Controller Unit (7) so ausgebildet ist, das wenn der Host unter Verwendung eines Befehls aus dem Befehlssatz der Speicherkarte, der an den Speicher (9) gerichtet ist
und der die Daten aus dem Datenobjekt lesen soll, einen aus dem Speicher daraus
ausgelesenen Datenstrom analysiert und wenn das Schlüsseldarenmuster (13) erkannt wird, so wird der Datenstrom durch Daten
vom Funktionsmodul (11) angereichert, um den so modifizierten Datenstrom an den Host weiterzuleiten, und wenn kein Schlüsseldatenmuster (13) erkannt wird, werden die Daten unmodifiziert an den Host weitergeleitet.

8. Multifunktionsspeicherkarte zum Senden und Empfangen von einem Host, umfassend
eine Schnittstelle zum Host,
ein Funktionsmodul (11),
Speicher (9),
ein Controller Unit (7), die dem Speicher (9) und dem Funktionsmodul (11) vorgeschaltet ist und den Zugriff auf den Speicher (9) und das Funktionsmodul(11) kontrolliert, wobei das Funktionsmodus (11) verschieden von einer Datenspeicherfunktion ist, wobei die Controller Unit (7), so ausgebildet ist, dass ein Datenstrom vom Host an die Multifunktionsspeicherkarte unter Verwendung eines Befehls aus dem Befehlssatz der Speicherkarte analysiert wird, der an den Speicher (9) gerichtet ist, wobei der Datenstrom Nutzdaten und Adressierungsdaten umfasst, wobei in die Nutzdaten vom Host ein vorab definiertes Schlüsseldatenmuster (13) eingefügt wurde, wenn die Daten an das Funktionsmodul (11) gerichtet sind, und kein Schlüsseldatenmuster (13) eingefügt wurde, wenn die Daten an den Speicher gerichtet sind, wobei die Controller Unit (7) so ausgebildet ist, dass; wenn das Schlüsseldatenmuster (13) erkannt wird, sie den Datenstrom an das Funktionsmodul (11) leitet, und wenn durch das Auswerten des Datenstromes kein Schlüssaldatanmustar erkannt wird, so werden die Daten an den Speicher weitergeleitet;
**dadurch gekennzeichnet, dass**
auf dem Speicher (9) Datenobjekte darunter auch ein Datenobjekt mit einem definiertes Schlüsseldatenmuster (13) abgelegt sind, wobei die Controller Unit (7) so ausgebildet ist, das wenn der Host unter Verwendung eines Befehls aus dem Befehlssatz der Speicherkarte, der an den Speicher (9) gerichtet ist und der die Daten aus dem Datenobjekt lesen soll, ein Lese-Datenstrom analysiert und wenn das Schlüsseldatenmuster (13) dardus erkannt wird, so wird der Lese-Datenstrom durch Daten vom Funktionsmodul (11) angereichert, um den modifizierten Lese-Datenstrom an den Host weiterzuleiten, und wenn kein Schlüsseldatenmuster (13) erkannt wird, werden die Daten unmodifiziert an den Host weitergeleitet.

9. Multifunktionsspeicherkarte nach Anspruch 8 wobei, das erste Schlüsseldatenmuster und das zweite Schlüsseldatenmuster identisch sind.

10. Multifunktionsspeicherkarte nach Anspruch 8, wobei das erste und das zweite Schlüsseldatenmuster einer Gruppierung zugeordnet, sind, um mehrere Funktionsmodule anzusprechen.

11. Multifunktionsspeicherkarte nach einem der vorhergehenden Multifunktionsspeicherkarten-Ansprüche, wobei das Funktionsmodul eines oder mehrere, der folgenden ist: eine Cryptographiprozessor, Funkmodul, Kamera, Radio, TV-Modul.

12. Multifunktionsspeicherkarte nach einem der vorhergehenden Multifunktionsspeicherkarten-Ansprüche, wobei der Speicher ein Flash-Speicher ist, nach einem der folgenden Standards SD-Karten, mini-SD, microSD-Karten, XD-Karten, Memory Stick, Compact Flash wobei die Datenübertragung vornehmlich seriell ist.

## Claims

1. A method for receiving data from a functional module (11) by a host without Installing additional drivers, wherein the functional module is arranged on a multi-function memory card (5) comprising a controller unit (7) and a memory (9), wherein the controller unit (7) is connected upstream to the memory (9) and to the functional module (11) and controls access to the memory (9) and the functional module (11), wherein the functional module (11) is different from a data storage function, wherein on the memory (9) data objects Including a data object with a defined key data pattern (13) are stored, comprising the following steps:
- Requesting a data object from the memory (9) of the multi-function memory card (5) by a host, using an instruction which is in the instruction set of the memory card, which Is directed to memory (9), and which should read the data object from the memory (9), when data is to be transferred from the functional module (11) to a host;
- Analyzing the requested data stream through the controller unit (7) and when the key data pattern (13) is detected, the data stream is enriched with data from the functional module (11), In order to forward the modified data stream to the host, and if no key pattern is detected , the data is forwarded unmodified to the host.

2. A method for receiving data from a functional module (11) by a host without Installing additional drivers, wherein the functional module is arranged on a multi-function memory card (5) comprising a controller unit (7) and a memory (9), wherein the controller unit (7) is connected upstream to the memory (9) and to the functional module (11) and controls access to the memory (9) and the functional module (11), wherein the functional module (11) is different from a data storage function, wherein on the memory (9) data objects including a data object with a defined key data pattern (13) are stored, comprising the following steps:
- Sending a data stream from the host to the multi-function memory card (5), using an Instruction which is in the instruction set of the memory card, which is directed to the memory (9), wherein the data stream comprises payload data and addressing data and wherein a pre-defined first key data pattern (13) was inserted into the payload data of the data stream, if the data is directed to the function module (11), and no key data pattern (13) is inserted, if the data stream contains data which is directed to the memory;
- Receiving the data stream through the multi-function memory card (5) and analyzing the data stream by the controller unit (7) and when the first key data pattern (13) is detected, then the data (15) will be transferred from the data stream to the functional module (11),
- Processing of data by the function module and providing the processed data to the controller unit (7)
**characterized by**
- Requesting a data object from the memory (9) of the multi-function memory card (5) by a host, wherein the memory (9) data objects includes a data object stored with a defined second key data pattern (13), by using an instruction in the instruction set of the memory card being directed to the memory (9), and which should read the data object from the memory (9),
- Analyzing the requested read data stream through the controller unit (7) and when the second key data pattern (13) is detected, parts of the read data stream are replaced through data from the function module (11) to forward the modified reading data stream to the host, and if no second key data pattern is detected, the data is forwarded to the host unmodified,

3. A method according to claim 2, wherein the first key data pattern and the second key data pattern are identical.

4. Assigned method of claim 2, wherein the first and second key data pattern are assigned to a group to address a plurality of function modules.

5. A method according to any one of the preceding claims, wherein the functional module is one or more of the following: a cryptographic processor, radio module, camera, radio, TV module.

6. A method according to any one of the preceding claims, wherein the memory is a flash memory, according to one of the following standards: SD cards, mini-SD, micro-SD cards, XD cards, memory stick, compact flash wherein the data transfer is primarily serial.

7. Multi-function memory card to send data to a host of comprising an interface to the host
a functional module (11),
a memory (9),
a controller unit (7) that is connected upstream to the memory (9) and the functional module (11) and controls access to the memory (9) and the functional module (11), wherein the functional module (11) is different from a data storage function, wherein on the memory (9) a data object with a defined key data pattern (13) is stored, wherein the controller unit (7) is designed in such way a that when the host by using a command from the command set of the memory card, which is addressed to the memory (9) and is meant to read the data from the data object, to analyze a memory data stream read from the memory (9), and if the key data pattern (13) is detected therein, the data stream with data from the functional module (11) is enriched, to thus forward the modified data stream to the host, and If no key data pattern (13) is detected, the data is forwarded unmodified to the host.

8. Multi-function memory card for transmitting and receiving from a host, comprising an interface to the host,
a functional module (11),
a memory (9),
a controller unit (7) that is connected upstream to the memory (9) and the functional module (11) and controls access to the memory (9) and the functional module (11), wherein the functional module (11) is different from a data storage function, wherein the controller unit (7) Is formed so that a data stream from the host to the multi-function memory card using a command from the command set of the memory card, which is directed to the memory (9), Is analyzed ,wherein the data stream comprises payload data and addressing data, wherein a pre-defined key data pattern (13) is inserted into the payload from the host, when the data is addressed to the functional module (11), and no key data pattern (13) inserted, when the data is directed to the memory, wherein the controller unit (7) is designed, so that when the key data pattern (13) is detected, it forwards the data stream to the functional module (11), and if by evaluation the data stream no key data pattern is detected, the data is forwarded to the memory;
**characterized in that**
on the memory (9) storage data objects including a data object with a defined key data pattern (13) are stored, wherein the controller unit (7) is formed so that when the host by using a command from the command set of the memory card, which is addressed to the memory (9), and to read the data from the data object, to analyze a read-data stream and when the key data pattern (13) is detected therein, then the read-data stream with data from the functional module (11) is enriched to forward the modified reading data stream to the host, and if no key data pattern (13) is detected, the data is forwarded unmodified to the host.

9. Multi-function memory card of claim 8 wherein, the first key data pattern and the second key data pattern are identical.

10. Multi-function memory card according to claim 8, wherein the first and second key data pattern are assigned to a group to address a plurality of function modules.

11. Multi-function memory card according to one of the preceding multifunctional memory card claims, wherein the functional module is one or more of the following: a cryptography processor, radio module, camera, radio, TV module.

12. Multi-function memory card according to one of the preceding multifunctional memory card claims, wherein the memory is a flash memory, according to one of the following standards SD cards, mini-SD, micro-SD cards, XD cards, memory stick, compact flash wherein the data transfer is primarily serial:

## Revendications

1. Un méthode de réception de données d'un module fonctionnel (11) d'un central sans installation de pilotes additionnels, dans laquelle le module fonctionnel est disposé sur une carte mémoire multifonctions (5) comprenant une unité de commande (7) et une mémoire (9), dans laquelle l'unité de commande (7) est connectée en amont de la mémoire (9) et du module fonctionnel (11) et commande l'accès à la mémoire (9) et au module fonctionnel (11), dans laquelle le module fonctionnel (11) est distinct d'une fonction de stockage de données, dans laquelle des objets de données sont stockés dans la mémoire (9) comportant un objet de donnée avec un motif de donnée de clé défini (13), comportant les étapes:
- la requête d'un objet de données depuis la mémoire (9) de la carte mémoire multifonctions (5) par un central, au moyen d'une instruction qui est dans le jeu d'instructions de la carte mémoire, laquelle est dirigée vers la mémoire (9), et à des fins de lecture de l'objet de donnée dans la mémoire (9), lorsque des données doivent être transférées depuis le module fonctionnel (11) vers un central;
- l'analyse du flux de données demandées au travers l'unité de commande (7) et lorsque le motif de donnée de clé défini est détecté, le flux de données est enrichi au moyen de données du module fonctionnel (11), afin to faire suivre le flux de données modifié au central, et lorsque qu'aucun motif de donnée de clé défini n'est détecté, les données sont transmises vers le central sans modification.

2. Une méthode de réception de données d'un module fonctionnel (11) d'un central sans installation de pilotes additionnels, dans laquelle le module fonctionnel est disposé sur une carte mémoire multifonctions (5) comprenant une unité de commande (7) et une mémoire (9), dans laquelle l'unité de commande (7) est connectée en amont de la mémoire (9) et du module fonctionnel (11) et commande l'accès à la mémoire (8) et au module fonctionnel (11), dans laquelle le module fonctionnel (11) est distinct d'une fonction de stockage de données, dans laquelle des objets de données sont stockés dans la mémoire (9) comportant un objet de donnée avec un motif de donnée de clé défini défini (13), comportant les étapes:
- la transmission d'un flux de données depuis le central vers la carte mémoire multifonctions (5), au moyen d'une instruction qui est dans le jeu d'instructions de la carte mémoire, laquelle est dirigée vers la mémoire (9), dans laquelle le flux de données des données utiles et une adresse et dans laquelle un premier motif de donnée de clé défini prédéfini (13) a été inséré dans la donnée utile du flux de données, si la donnée est dirigée vers le module fonctionnel (11), et aucun motif de donnée de clé défini (13) n'est inséré, lorsque le flux de données contient des données destinées à la mémoire;
- la réception du flux de données au travers la carte mémoire multifonctions (5) et l'analyse du flux de données par l'unité de commande (7) et lors de la détection du premier motif de donnée de clé défini (13), le transfert de la données (15) depuis le flux de données vers le module fonctionnel (11);
- le traitement des données par le module fonctionnel et la mise à disposition des données traitées à l'unité de commande (7),
**caractérisée par** :
- la requête d'un objet de données de la mémoire (9) de la carte mémoire multifonctions (5) par un central, dans laquelle les objets de données de la mémoire (9) comporte des objets de données stockés avec un second motif de donnée de clé défini (13), au moyen d'une instruction comprise dans le jeu d'instructions de la carte mémoire dirigée vers la mémoire (9), à des fins de lecture de l'objet de données depuis la mémoire (9);
- l'analyse du flux de données de lecture requises au travers l'unité de commande (7) et à la suite de la détection du second motif de donnée de clé (13), le remplacement des parties du flux du données en lecture par des données du module fonctionnel (11) pour faire suivre au central le flux de données de lecture modifié, et lorsque le second motif de donnée de clé n'est pas détecté, la transmission sans modification au central des données.

3. La méthode selon la revendication 2, dans laquelle les premier et second motifs de donnée de clé sont identiques.

4. La méthode selon la revendication 2, dans laquelle les premier et second motifs de donnée de clé sont affectés à un groupement pour l'adressage de plusieurs modules fonctionnels.

5. Une méthode selon l'une quelconque des revendications précédentes, dans laquelle le module fonctionnel est l'un des suivants: un processeur cryptographique, un module radio, un appareil photographique, une radio, un module de télévision.

6. Une méthode selon l'une quelconque des revendications précédentes, dans laquelle la mémoire est une mémoire flash, suivant l'un des standards: SD, mini-SD, micro-SD, XD, *memory stick, compactflash,* dans laquelle le transfert de données est principalement un transfert série.

7. Une carte mémoire multifonctions pour la transmission de données à un central comportant:
une interface destinée au central,
un module fonctionnel (11),
une mémoire (9),
une unité de commande (7) qui est connectée en amont de la mémoire (9) et du module fonctionnel (11) et qui commande l'accès à la mémoire (9) et au module fonctionnel (11), dans laquelle le module fonctionnel (11) est différent d'une fonction de stockage de données, dans laquelle un objet de données est stocké dans la mémoire (9) avec un motif de données de clé défini (13), dans laquelle l'unité de commande (7) est conçue de telle manière que lorsque le central, au moyen d'une instruction comprise dans le jeu d'instructions de la carte mémoire, adressée à la mémoire (9), et pour la lecture de la donnée de l'objet de données, analyse le flux de données de la mémoire lue depuis la mémoire (9), et lorsque le motif de donnée de clé (13) y est détecté, le flux de données est enrichi par des données du module fonctionnel (11), pour faire suivre un flux de données modifié au central et, lorsque aucun motif de donnée de clé (13) n'est détecté, les données sont transmises non modifiées vers le central.

8. Une carte mémoire multifonctions pour la transmission et la réception de données d'un central, comprenant:
une interface destinée au central,
un module fonctionnel (11),
une mémoire (9),
une unité de commande (8) connectée en amont de la mémoire (9) et du module fonctionnel (11) et qui commande l'accès à la mémoire (9) et au module fonctionnel (11), dans laquelle le module fonctionnel (11) est différent d'une fonction de stockage de données, dans laquelle l'unité de commande (7) est disposée de manière à permettre l'analyse d'un flux de données du central vers la carte mémoire multifonctions au moyen d'une commande extraite du jeu de commandes de la carte mémoire, laquelle est dirigée vers la mémoire (9), dans laquelle le flux de données comporte des données utiles et des données d'adressage, dans lesquelles un motif de donnée de clé pré-défini (13) est inséré dans les données utiles depuis le central,
lorsque les données sont destinées au module fonctionnel (11), et aucun motif de donnée de clé (13) n'est inséré, lorsque la données est destinée à la mémoire, dans laquelle l'unité de commande (7) est conçue, de telle manière que lors de la détection du motif de donnée de clé (13), il fait suivre le flux de données vers le module fonctionnel (11) et en l'absence de détection de motif de donnée de clé dans le flux de données, les données sont transmises à la mémoire,
**caractérisé en ce que** des objets de données comportant un objet de données avec un motif de donnée de clé défini (13) sont stockés dans la mémoire (9), dans laquelle l'unité de commande (7) est formée de telle manière lorsque le central, au moyen d'une instruction comprise dans le jeu d'instructions de la carte mémoire,
adressée à la mémoire (9), et pour la lecture de la donnée de l'objet de données,
analyse le flux de données en lecture, et lorsque le motif de donnée de clé (13) y est détecté, le flux de données en lecture est enrichi par des données du module fonctionnel (11), pour faire suivre un flux de données lues modifié au central et,
lorsque aucun motif de donnée de clé (13) n'est détecté, les données sont transmises non modifiées vers le central.

9. Une carte mémoire multifonctions selon la revendication 8, dans laquelle le premier et le second motifs de donnée de clé (13) sont identiques.

10. Une carte mémoire multifonctions selon la revendication 8, dans laquelle les premier et second motifs de donnée de clé sont affectés à un groupement pour l'adressage d'une pluralité de modules fonctionnels.

11. Une carte mémoire multifonctions selon l'une quelconque des revendications précédentes définissant une carte à mémoire multifonctions, dans laquelle le module fonctionnel est l'un des suivants: un processeur cryptographique, un module radio, un appareil photographique, une radio, un module de télévision.

12. Une carte mémoire multifonctions selon l'une quelconque des revendications précédentes définissant une carte à mémoire multifonctions" dans laquelle la mémoire est une mémoire flash, suivant l'un des standards: SD, mini-SD, micro-SD, XD, *memory stick, compactflash,* dans laquelle le transfert de données est principalement un transfert série.
